# Europäisches Patentamt

(19) **European Patent Office**

**Office européen des brevets**

(11) Publication number: **0 073 082**
**B1**

(12) **EUROPEAN PATENT SPECIFICATION**

(45) Date of publication of patent specification: **11.12.85**

(51) Int. Cl.⁴: **G 01 N 11/04**

(21) Application number: **82201025.2**

(22) Date of filing: **12.08.82**

(54) **Method for manufacturing a measuring capillary.**

(30) Priority: **17.08.81 NL 8103839**

(43) Date of publication of application:
**02.03.83 Bulletin 83/09**

(45) Publication of the grant of the patent:
**11.12.85 Bulletin 85/50**

(84) Designated Contracting States:
**DE FR GB IT NL SE**

(56) References cited:
**FR-A-2 343 241**
**US-A-3 342 063**
**US-A-4 241 602**

**POLYMER, vol. 17, March 1976, pages 235-240, Guilford, G.B., J.L. LEBLANC: "New slit die rheometer: some results with a butadiene-styrene block copolymer"**

**(C.D. HAN et al.)**

**(W.J. SMYTHE)**

**(ANTAR PETROLES DE L'ATLANTIQUE)**

(73) Proprietor: **TJEBA HOLDING B.V.**
**van Ostadelaan 33**
**NL-2923 AJ Krimpen a/d IJssel (NL)**

(72) Inventor: **Van Breest Smallenburg, Tjeerd**
**van Ostadelaan 33**
**NL-2923 AJ Krimpen A/D Ijssel (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The invention relates to a method for manufacturing a capillary for measuring the viscosity of a fluid in which in each of at least two substantially plate-shaped parts a recess is formed, the plate-shaped parts are superposed so that the recesses formed therein, define together a capillary and the plate-shaped parts are connected to each other. The method according to the invention is particularly useful for manufacturing a capillary for a viscosity meter for measuring and regulating the viscosity of heavy oils. This type of viscosity meter is mainly used in diesel engines.

For diesel engines it is of the utmost importance that the viscosity of the fuel fed to the engine is as constant as possible so that the rate in which the fuel is atomised into the cylinders is also constant. For that purpose at least a portion of the fuel is passed through a capillary, in which the pressure difference along said capillary is measured for obtaining information about the viscosity of the fuel, which information may be converted into a signal for heating the fuel more or less.

US—A—4241602 discloses such a method for manufacturing a capillary in an apparatus for determining rheological properties of visco-elastic fluids.

However, the measuring capillary obtained by the known method has the disadvantage that in using it in an apparatus for determining the viscosity of heavy oils, the measurements are unreliable due to deposits of oil residues formed onto the inner wall of the capillary.

The aim of the invention is to provide a method for manufacturing a measuring capillary in which the obtained measuring capillary does not present said disadvantage.

This aim is achieved by the method according to the invention being characterized in that prior to the superposing step, the walls of the recesses and at least the surface portions of the plate-shaped parts directly adjacent thereto are provided with a coating of a substance, preventing deposits from forming.

In this way a measuring capillary is obtained of which the wall, in spite of the extremely small cross-section of the capillary, is coated with a substance preventing deposits from forming. By coating the portions of the plate-shaped parts adjacent the recesses with said substances, sealings between the plate-shaped parts adjacent the recesses are obtained so that leakage is excluded.

Preferably the coating substances consists of polytetrafluoroethylene. Said substance prevents in an excellent way, deposits from forming, but may show the phenomenon of flow at room temperature. However, because in the method according to the invention the coating may by very thin, for example in the order of 80 μm, said phenomenon has no influence on the stability of the dimension of the inner cross-section of the measuring capillary.

The invention will be described hereafter with reference to the drawing, in which

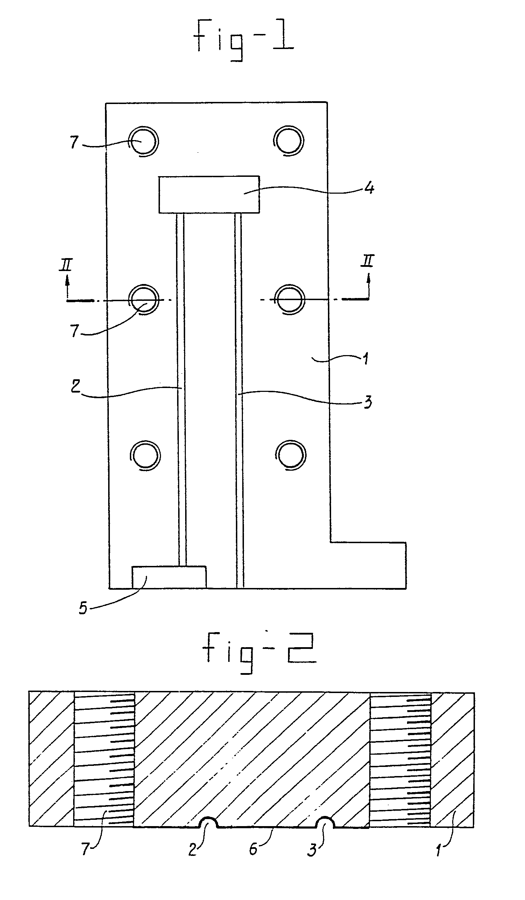

Fig. 1 shows in top view one of the plate-shaped parts for the manufacturing a measuring capillary according to the invention.

Fig. 2 is an enlarged cross-section along the line II—II in Fig. 1.

As shown in the drawing in the top face of a plate-shaped part — 1 two recesses 2 and 3 are formed each having a cross-section in form of approximately half a circle. Besides the larger recesses 4 and 5 may still be formed.

The walls of the recesses 2 and 3 and the portions of the plate 1 adjacent to it, are subsequently coated with a layer of polytetrafluoroethylene 6, which layer has a thickness of for example 80 μm.

In similar way a second plate-shaped part is formed after which said second plate-shaped part is put in top of the first plate-shaped part such that the recesses 2 and 3 form together a continuous capillary having a circular cross-section. The plates are fixed to each other by means of bolts screwed into the threaded holes 7.

## Claims

1. Method for manufacturing a capillary for measuring the viscosity of a fluid in which in each of at least two substantially plate-shaped parts a recess is formed, the plate-shaped parts are superposed so that the recesses formed therein define together a capillary and the plate-shaped parts are connected to each other, characterized in that, prior to the superposing step, the walls of the recesses and at least the surface portions of the plates directly adjacent thereto are provided with a coating of a substance preventing deposits from forming.

2. Method according to claim 1, characterized in that the coating substance consists of polytetrafluoroethylene.

## Patentansprüche

1. Verfahren zur Herstellung einer Kapillare für die Messung der Viskosität eines Fluides, bei welchem in jedem von wenigstens zwei im wesentlichen plattenförmigen Teilen eine Vertiefung ausgebildet wird, die plattenförmigen Teile so übereinander gelegt werden, daß die darin ausgebildeten Vertiefungen zusammen eine Kapillare bilden und die plattenförmigen Teile miteinander verbunden werden, dadurch gekennzeichnet, daß vor dem Übereinanderlegungsschritt die Wände der Vertiefungen und wenigstens die Oberflächenbereiche der Platten, die ihnen direkt benachbart sind, mit einer Beschichtung aus einer Substanz, die die Ausbildung von Niederschlägen verhindert versehen werden.

2. Verfahren nach Anspruch 1, dadurch gekennzeichnet, daß die Beschichtungssubstanz aus Polytetrafluoroäthylen besteht.

## Revendications

1. Procédé de fabrication d'un capillaire pour mesurer la viscosité d'un fluide, dans lequel dans chacune d'au moins deux pièces pratiquement en forme de plaque, un évidement est formé, les pièces en forme de plaque sont superposées de telle sorte que les évidements formés dans celles-ci définissent ensemble un capillaire et les pièces en forme de plaque sont assemblées l'une à l'autre, caractérisé en ce qu'avant le stade de superposition, les parois des évidements et au moins les parties superficielles des plaques directement adjacentes à celles-ci sont munies d'un revêtement d'une substance empêchant des dépôts de se former.

2. Procédé selon la revendication 1, caractérisé en ce que la substance de revêtement est constituée de polytétrafluoroéthylène.

Fig-1

Fig-2